# EUROPÄISCHE PATENTSCHRIFT

(11) **EP 4 264 091 B1**
(45) Veröffentlichungstag und Bekanntmachung des Hinweises auf die Patenterteilung: **11.03.2026**
(21) Anmeldenummer: 21836384.4
(22) Anmeldetag: 07.12.2021
(51) Int. Cl.: F16K 7/12, F16K 31/122, F16K 27/02

(54) **MEMBRANVENTIL**
DIAPHRAGM VALVE
VANNE À MEMBRANE

(30) Priorität: 18.12.2020 DE 102020134305
(43) Veröffentlichungstag der Anmeldung: 25.10.2023
(73) Patentinhaber: SED Flow Control GmbH, 74906 Bad Rappenau (DE)
(72) Erfinder: RUTSCH, Uwe, 74670 Forchtenberg (DE); OBERHEIM, Rainer, 64625 Bensheim (DE); EHMIG, Uwe, 74177 Bad Friedrichshall (DE); FUCHS, Julian, 63322 Urberach (DE)
(74) Vertreter: patcare Patentanwälte Partnerschaft mbB
(86) Internationale Anmeldenummer: PCT/EP2021/084622
(87) Internationale Veröffentlichungsnummer: WO 2022/128639

(56) Entgegenhaltungen:
- EP-A1- 3 333 465
- EP-A1- 3 333 465
- EP-A2- 2 843 279
- EP-A2- 2 843 279
- JP-A- 2003 343 753
- JP-A- 2003 343 753
- US-A- 2 863 631
- US-A- 2 863 631
- US-B2- 10 781 926
- US-B2- 10 781 926
- US-B2- 9 328 829
- US-B2- 9 328 829

## Beschreibung

Die Erfindung betrifft ein Membranventil gemäß der im Oberbegriff des Patentanspruches 1 angegebenen Art.

Membranventile sind aus dem Stand der Technik hinreichend bekannt und weisen in der Regel ein Aktorgehäuse, eine Membran und ein Ventilgehäuse mit mindestens einem Ein- und Auslass auf. Im Strömungskanal des Ventilgehäuses, also zwischen Ein- und Auslass, ist ein - häufig in Form eines Steges ausgebildeter - Ventilsitz angeordnet. Die oberhalb des Ventilsitzes und zwischen dem Aktor- und Ventilgehäuse angeordnete Membran dichtet über ihren äußeren Randabschnitt das Membranventil nach außen hin ab und dient als ein mit dem Ventilsitz zusammenwirkendes Ventilglied. Hierzu ist ein innerer Abschnitt der Membran mit einem im Aktorgehäuse angeordneten Antrieb verbunden, mittels dem die Membran zum Schließen des Strömungskanal auf den Ventilsitz aufgepresst oder zum Öffnen des Strömungskanal vom Ventilsitz weggezogen werden kann. Ein derartiges Membranventil ist beispielsweise aus der DE 20 2014 102 658 U1 bekannt.

Da die Membran aufgrund der wechselnden Belastung und der unterschiedlichen Medien des Prozessfluids starken Beanspruchungen unterliegt, müssen die Membrane der Membranventile regelmäßig gewechselt werden.

Das Wechseln der Membran ist häufig umständlich und der Zugang zu den Verbindungselementen schwer zugänglich, da der Platz um das eingebaute Membranventil herum durch Rohrleitungen und anderer Feldgeräte häufig verbaut ist. Ein weiterer Nachteil ist, dass die Ventilgehäuse unterschiedliche Geometrien und Schnittstellen zum Anbauen der den Antrieb aufweisenden Aktorgehäuse haben.

Die gattungsbildende EP 3 333 465 A1 offenbart ein Membranventil, gemäß der Präambel von Anspruch 1, bei dem zwischen dem den Antrieb aufnehmenden Aktorgehäuse und dem Ventilgehäuse ein Zwischenflansch vorgesehen ist.

Der Erfindung liegt die Aufgabe zugrunde ein Membranventil gemäß der im Oberbegriff des Patentanspruches 1 angegebenen Art derart weiterzubilden, dass neben einer vereinfachten Befestigung eines Aktorgehäuses an bestehende Anlagen, insbesondere ohne Ersatz oder Bearbeitung des im Rohrleitungsverbund fest verbauten Ventilgehäuses, auch ein schneller und einfacher Austausch der Membran ermöglicht ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst das Membranventil ein Ventilgehäuse, mit zumindest einem Strömungskanal zur Fluiddurchströmung und einem Ventilsitz, ein mit dem Ventilgehäuse verbindbares, einen Antrieb aufweisendes Aktorgehäuse sowie eine das Ventil- und Aktorgehäuse fluiddicht trennende Membran. Die Membran ist dabei über ihren Randbereich in axialer Richtung a betrachtet verklemmt und fluiddicht zwischen Ventil- und Aktorgehäuse gehalten ist und steht mit dem im Aktorgehäuse angeordneten Antrieb derart in Wirkverbindung, dass die Membran zum Schließen des Strömungskanals auf den Ventilsitz aufgepresst oder vice versa zum Öffnen des Strömungskanals vom Ventilsitz weggezogen werden kann.

Weiterhin ist das Aktorgehäuse über einen mit dem Ventilgehäuse lösbar verbindbaren Zwischenflansch mit dem Ventilgehäuse verbunden, wobei das Aktorgehäuse seinerseits derart lösbar mit dem Zwischenflansch verbindbar ist, dass beim Befestigen des Aktorgehäuses an den Zwischenflansch, das Aktorgehäuse eine Druckkraft auf den Randbereich der Membran ausübt.

Diese Ausgestaltung erweist sich als vorteilhaft, da für eine Umrüstung bestehender Anlagen lediglich der Zwischenflansch an das Ventilgehäuse bzw. an die vorliegende Flanschanbindung des Ventilgehäuses anzupassen ist, und damit eine Bearbeitung des Ventilgehäuses oder ein Austausch des Ventilgehäuses nicht erforderlich ist.

Zudem ist es nunmehr möglich ein einheitliches Membran-Wechselsystem für beliebige Ventilgehäusetypen zu realisieren, da vorliegend die Flanschverbindung zwischen dem Zwischenflansch und dem Ventilgehäuse nicht gelöst werden muss.

Weiterhin ist durch den Zwischenflansch eine Anpassung an die gegebenen vorherrschenden Bauraumverhältnisse ermöglicht, sodass durch eine entsprechende, an die Bauraumverhältnisse angepasste Ausbildung des Zwischenflansches eine vereinfachte Zugänglichkeit zu Verbindungselementen gewährleistet werden kann.

Zudem ist der Austausch bzw. der Wechsel der Membran schnell und einfach durchzuführen, da neben der - durch eine entsprechende Ausbildung des Zwischenflansches ermöglichten vereinfachten Zugänglichkeit zu den Verbindungselementen - beim Befestigen des Aktorgehäuses an den Zwischenflansch zugleich auch die für die Verklemmung der Membran erforderliche Druckkraft erzeugt wird.

Zur Gewährleistung einer für die Verklemmung der Membran ausreichend großen Druckkraft, sind die zwischen Aktorgehäuse und Zwischenflansch wirksamen Befestigungsmittel dabei so ausgebildet, dass beim Verbinden des Aktorgehäuses mit dem Zwischenflansch, das Aktorgehäuse eine in axiale Richtung a gerichtete Relativbewegung in Bezug zum Zwischenflansch und damit in Bezug zum Ventilgehäuse ausführt.

Gemäß einer nicht beanspruchten Ausführungsform sind die Befestigungsmittel in Form eines am Zwischenflansch ausgebildeten Außengewindes und einer - den Zwischenflansch und das Aktorgehäuse umfangsseitig umschließenden, ein zum Außengewinde korrespondierendes Innengewinde aufweisende - Überwurfmutter ausgebildet. Zum Ausüben einer Druckkraft auf das Aktorgehäuse beim Anziehen der Überwurfmutter, stehen Überwurfmutter und der Zwischenflansch in ihrem in axialer Richtung a betrachteten Überlappungsbereich über korrespondierend zueinander angeordnete, in axialer Richtung a gegenüberliegende Anpressflächen miteinander in Kontakt. Da lediglich ein zentrales Befestigungselement, nämlich die Überwurfmutter, zu betätigen ist, ist eine einfache und schnelle Demontage bzw. Montage der beiden Gehäuseteile und damit ein schneller Austausch der Membran ermöglicht.

Gemäß einer weiteren, nicht beanspruchten Ausführungsform sind die Befestigungsmittel in Form eines am Zwischenflansch ausgebildeten Innengewindes und eines hierzu korrespondierenden, am Aktorgehäuse ausgebildeten Außengewindes ausgebildet. D.h., das Aktorgehäuse ist unmittelbar, nämlich mittels Verschrauben und damit ohne zusätzliche Befestigungselemente, mit dem Zwischenflansch verbindbar.

Dabei kann eine - in axialer Richtung a zwischen dem das Außengewinde aufweisende Teil des Aktorgehäuses und dem Randbereich der Membran angeordnete - Hülse vorgesehen sein, über die beim Verschrauben von Aktorgehäuse mit dem Zwischenflansch, der Kraftfluss vom Aktorgehäuse auf den Randbereich der Membran erfolgt. Durch die Hülse wird eine - die Membran u.U. beschädigende - relative Drehbewegung zwischen Randbereich der Membran und Aktorgehäuse vermieden. In der Regel sind die unterschiedlich großen Reibkoeffizienten, nämlich Reibkoeffizient in der Kontaktfläche Hülse und Membran (=> Hülse aus Metall; Membran aus elastisch verformbarer Kunststoff, Elastomer, Gummi) größer als Reibkoeffizient in der Kontaktfläche Aktorgehäuse und Hülse (=> beide aus Metall, Kunststoff bzw. Kombination), ausreichend, um eine relative Drehbewegung zwischen Hülse und Randbereich der Membran zu vermeiden. Alternativ und/oder zusätzlich kann zwischen Hülse und Zwischenflansch eine Verdrehsicherung vorgesehen sein.

Erfindungsgemäß sind die Befestigungsmittel in Form eines den Zwischenflansch und das Aktorgehäuse in axialer Richtung a bereichsweise überlappenden, den Zwischenflansch und das Aktorgehäuse umfangsseitig umschließenden Kulissenringes mit einer an seiner inneren Umfangsfläche eingebrachten Nut sowie in Form von zwei in der Nut zwangsgeführten, am Aktorgehäuse angeordneten ersten Mitnahmeelemente und zwei, in axialer Richtung a betrachtet fluchtend zu den ersten Mitnahmeelemente am Zwischenflansch angeordnete, in der Nut zwangsgeführten zweiten Mitnahmeelemente ausgebildet. Um bei einer Drehbewegung des Kulissenrings in Bezug zum Aktorgehäuse und Zwischenflansch eine Druckkraft auf die Membran auszuüben, ist die Nut mit bereichsweise einen gegensinnig rampenförmigen Verlauf aufweisenden Nutwänden ausgebildet. Die Formulierung "gegensinnig rampenförmigen Verlauf" ist dabei insbesondere so zu verstehen, dass in axialer Richtung a betrachtet die obere Nutwand bereichsweise rampenförmig nach unten, ein Maximum erreichend und anschließend wieder rampenförmig nach oben verlaufend ausgebildet ist, während die in axialer Richtung a betrachtet untere Nutwand in diesem Bereich gegensinnig, d.h. rampenförmig noch oben, ein Maximum erreichend und anschließend rampenförmig nach unten, verlaufend ausgebildet ist.

Dies hat den Effekt, dass aufgrund der nunmehr ermöglichten, schnellverschlussartigen Verbindungslösung zwischen Aktorgehäuse und Zwischenflansch, ein besonders einfach und schnell durchzuführender Wechsel bzw. Austausch der Membran ermöglicht ist.

Erfindungsgemäß ist zudem vorgesehen, dass der Kulissenring in axiale Richtung a ausgerichtete Öffnungen bzw. Durchgänge zur Nut aufweist, die so dimensioniert und angeordnet sind, dass die in axiale Richtung a fluchtend zueinander angeordnete Mitnahmeelemente jeweils hindurchführbar sind, sodass durch eine entsprechende Drehung des Kulissenrings, d.h. in eine Position, in der Öffnungen bzw. Durchgänge und Mitnahmeelementen zueinander fluchten, eine einfache Demontage bzw. Montage ermöglicht ist.

Vorzugsweise ist zudem eine kleine Vertiefung im Bereich des Maximums einer oder beider Rampen vorgesehen, sodass in vorteilhafter Weise eine Verrastung des Mitnahmeelements in der Geschlossenstellung ermöglicht ist.

Um bei einer Drehung des Kulissenrings eine möglichst gleichmäßige Krafteinleitung zu gewährleisten, sind bevorzugt die zwei am Aktorgehäuse angeordneten ersten Mitnahmeelemente - und damit auch die zwei in axialer Richtung a fluchtend zu den ersten Mitnahmeelemente am Zwischenflansch angeordneten zweiten Mitnahmeelemente - in radialer Richtung r betrachtet gegenüberliegend angeordnet.

Bevorzugt sind dabei die Mitnahmeelemente als drehbar gelagerte Rollen ausgebildet, die mittels Wälzläger auf in radiale Richtung r ausgerichtete am Aktorgehäuse bzw. Zwischenflansch angeordnete Stifte gelagert sind. Hierdurch ist in vorteilhafter Weise eine besonders leichtgängige Betätigung des Kulissenrings ermöglicht.

Vorzugsweise weist der Kulissenring einen Antrieb zum Aufbringen eines Drehmoments auf. Hierdurch ist sichergestellt, dass auf eine einfache Art und Weise das für die Verspannung der Membran notwendige Drehmoment auf den Kulissenring übertragen werden kann.

Bevorzugt ist dabei der Antrieb in Form eines einfach zu greifenden, mit dem Kulissenring verbundenen Hebels ausgebildet.

Aus Bauraumgründen ist der Hebel dabei bevorzugt lösbar mit dem Kulissenring verbunden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine Schnittansicht einer nicht beanspruchten Ausführungsform eines Membranventils;
- Fig. 1b: das Membranventil aus Fig. 1a in einer Seitenansicht;
- Fig. 2a: eine weitere, nicht beanspruchte Ausführungsform eines Membranventils in einer Schnittdarstellung;
- Fig. 2b: eine Seitenansicht des Membranventils aus Fig. 2a;
- Fig. 3a: eine Schnittansicht eines erfindungsgemäßen Membranventils, und
- Fig. 3b: das Membranventil aus Fig. 3a in einer Seitenansicht.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

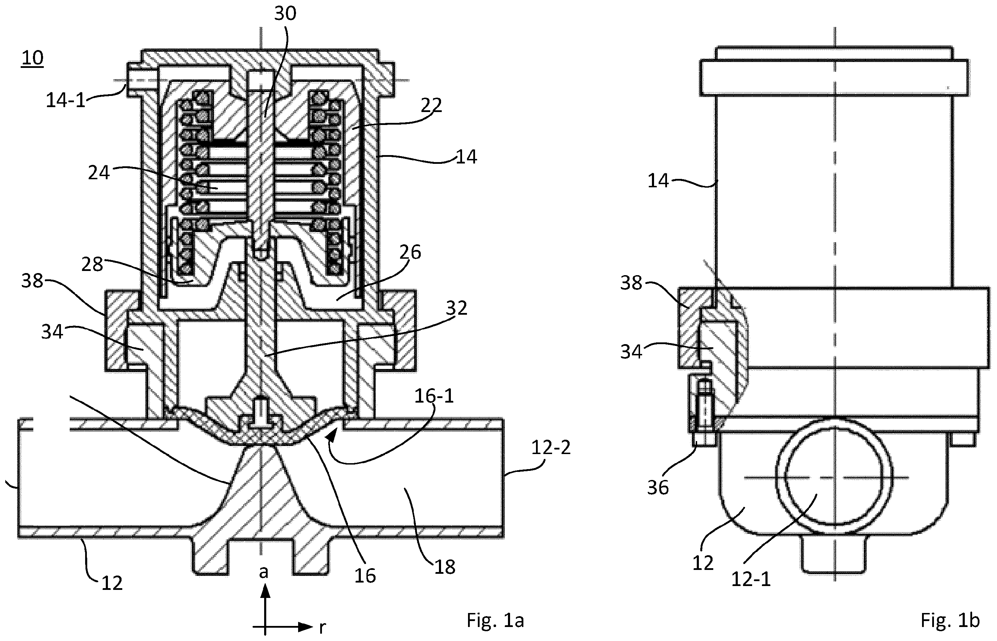

Fig. 1a bis Fig. 3b zeigen ein insgesamt mit der Bezugsziffer 10 bezeichnetes Membranventil. Das Membranventil 10 umfasst im Wesentlichen ein Ventilgehäuse 12, ein Aktorgehäuse 14 sowie eine das Ventil- und Aktorgehäuse 12, 14 fluiddicht trennende Membran 16, wobei die Membran 16 über ihren Randbereich 16-1 in axialer Richtung a betrachtet verklemmt und fluiddicht zwischen Ventil- und Aktorgehäuse 12, 14 gehalten ist.

Das Ventilgehäuse 12 weist einen Ein- und Auslass 12-1, 12-2 sowie einen im Strömungskanal 18 des Ventilgehäuses 12 angeordneten Ventilsitz 20 auf. Im Aktorgehäuse 14 ist ein mit der Membran 16 in Wirkverbindung stehender Antrieb integriert, über den die Membran 16 - wie in Fig. 1 dargestellt - zum Schließen des Ventils auf den Ventilsitz 20 aufpresst werden kann oder vice versa - zum Öffnen des Ventils - vom Ventilsitz 20 weggezogen werden kann.

Vorliegend handelt es sich bei dem Antrieb um einen pneumatischen Antrieb, d.h. der Antrieb erfolgt durch Zufuhr von Druckluft, die über entsprechende Öffnungen 14-1 ins Aktorgehäuse 14 zugeführt wird. Die zugeführte Druckluft umströmt einen Federträger 22 eines Federpakets 24 und gelangt in eine Druckkammer 26, die nach oben von einem beweglichen Kolben 28 begrenzt ist. Der Druck wirkt gegen den Kolben 28 und bewegt diesen nach Überschreiten der Vorspannkraft des Federpakets 24 in axialer Richtung a betrachtet nach oben. Über eine mit dem Kolben 28 verbundene Antriebstange 30 und einer im Aktorgehäuse 14 axial beweglich gelagerten, mit der Antriebsstange 30 und der Membran 16 fest verbundenen Ventilstange 32, wird die nach oben gerichtete Bewegung auf die Membran 16 übertragen. Bei dem dargestellten Membranventil 10 handelt es sich somit um einen sogenannten airto-open-Typ bzw. normal-geschlossen-Typ, da es im drucklosen Zustand über das Federpaket 24 geschlossen gehalten wird.

Das Membranventil 10 zeichnet sich dadurch aus, dass am Ventilgehäuse 12 ein Zwischenflansch 34 lösbar befestigt ist, über den das Ventilgehäuse 12 und Aktorgehäuse 14 lösbar miteinander verbunden sind. Wie insbesondere aus Fig. 1b, 2b und 3b ersichtlich, ist vorliegend der Zwischenflansch 34 über mehrere Schraubverbindungen 36 lösbar mit dem Ventilgehäuse 12 verbunden.

Gemäß der in Fig. 1a und Fig. 1b dargestellten Ausführungsform ist dabei das Aktorgehäuse 14 über eine Überwurfmutter 38 lösbar mit dem Zwischenflansch 34 verbunden. Hierzu ist der Zwischenflansch 34 radial außen mit einem - korrespondierend zum Innengewinde der Überwurfmutter 38 ausgebildeten - Außengewinde versehen. Über entsprechende, am Aktorgehäuse 14 und an der Überwurfmutter 38 ausgebildete, in axialer Richtung a betrachtet gegenüberliegend angeordnete Anpressflächen, stehen Überwurfmutter 38 und Aktorgehäuse 14 in Wirkverbindung, sodass bei einem Festziehen der Überwurfmutter 38 das Aktorgehäuse 14 in axiale Richtung a nach unten bewegt wird, wodurch der Randbereich 16-1 der Membran 16 fluiddicht zwischen Ventilgehäuse 12 und Aktorgehäuse 14 verklemmt wird.

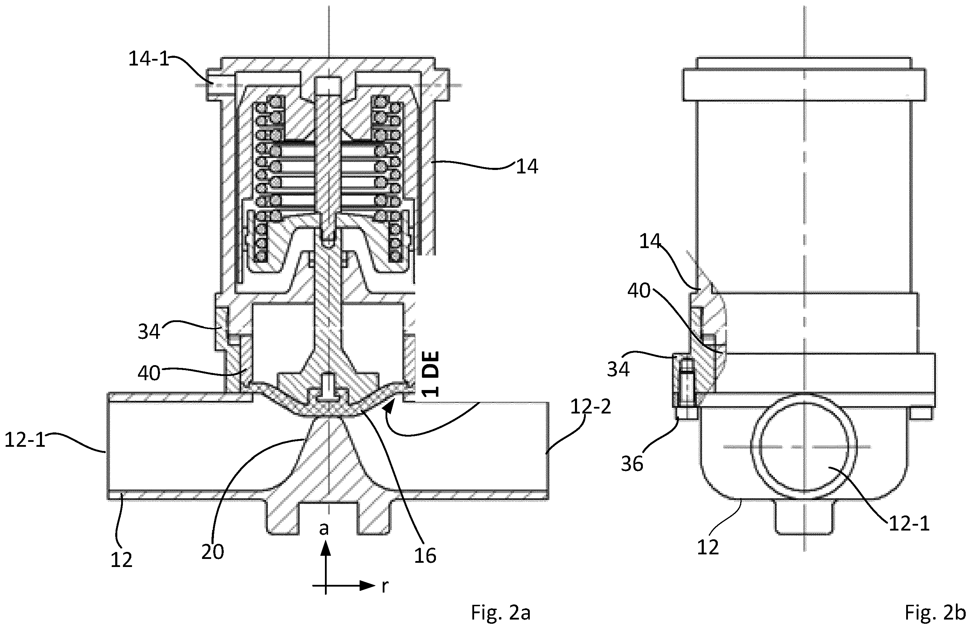

Die in Fig. 2a und 2b dargestellte weitere Ausführungsform entspricht im Wesentlichen der in Fig. 1a und Fig. 1b dargestellten Ausführungsform.

Die in Fig. 2a und 2b dargestellte Ausführungsform zeichnet sich dadurch aus, dass nunmehr das Aktorgehäuse 14 unmittelbar am Zwischenflansch 34, d.h. ohne ein zusätzliches Befestigungsmittel, befestigt ist. Hierzu ist der Zwischenflansch 34 an seinem in axialer Richtung a betrachtet, dem Aktorgehäuse 14 zugewandten Endbereich mit einem Innengewinde versehen und das Aktorgehäuse 14 weist entsprechend an seinem in axialer Richtung a betrachtet, dem Ventilgehäuse 12 zugwandten Endbereich ein - zum Innengewinde des Zwischenflansches 34 korrespondierend ausgebildetes - Außengewinde auf, sodass Aktorgehäuse 14 und Zwischenflansch 34 unmittelbar miteinander verschraubt werden können.

Wie Fig. 2a weiter zeigt, ist vorliegend - in axialer Richtung a betrachtet - zwischen dem das Außengewinde aufweisende Teil des Aktorgehäuses 14 und dem Randbereich 16-1 der Membran 16 eine Hülse 40 angeordnet. D.h. die Membran 16 bzw. der Randbereich 16-1 der Membran 16 ist zwischen Ventilgehäuse 12 und Hülse 40 verklemmt gehalten. Mit anderen Worten: Beim Verschrauben von Aktorgehäuse 14 und Zwischenflansch 34 erfolgt der Kraftfluss vom Aktorgehäuse 14 über die Hülse 40 auf den Randbereich 16-1 der Membran 16. Aufgrund der unterschiedlichen großen Reibkoeffizienten in den jeweiligen Kontaktflächen, nämlich kleiner Reibkoeffizient in der Kontaktflache zwischen Aktorgehäuse 14 und Hülse 40 (=> Metallpaarung Metall auf Metall) versus großer Reibkoeffizient in der Kontaktfläche zwischen Hülse 40 und Membran 16 (=> Metallpaarung Metall auf Elastomer), wird dabei eine Drehbewegung der Hülse 40 unterbunden, d.h. die Hülse 40 führt in Bezug zum Zwischenflansch 34 lediglich eine geradlinige Bewegung aus.

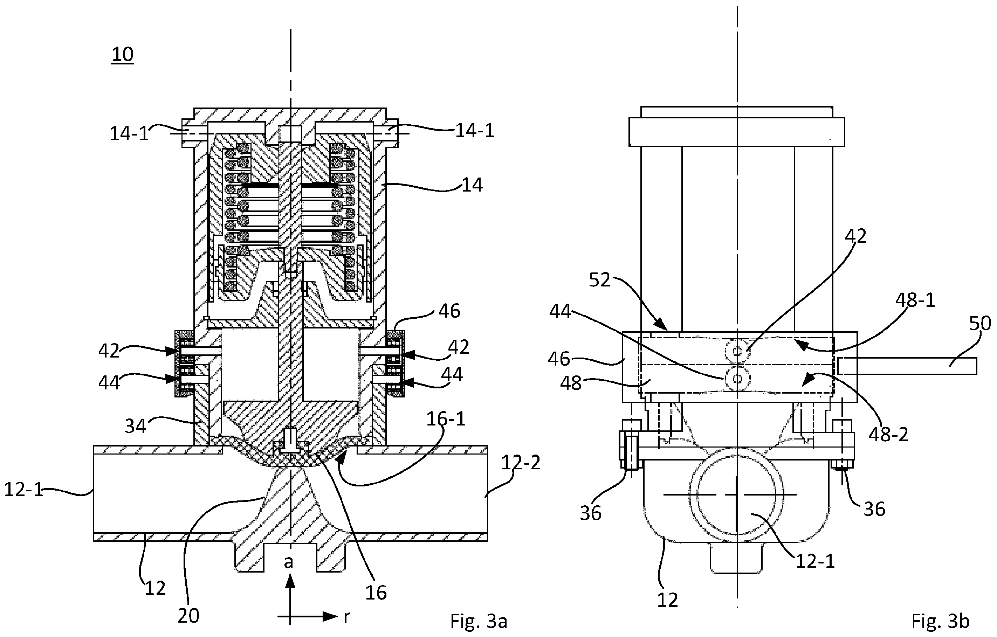

Die in Fig. 3a und 3b dargestellte Ausführungsform des erfindungsgemäßen Membranventils 10 entspricht im Wesentlichen den in Fig. 1a, 1b sowie in Fig. 2a, 2b dargestellten Ausführungsformen.

Kennzeichnend für die in Fig. 3a und 3b dargestellte Ausführungsform des erfindungsgemäßen Membranventils 10 ist die nunmehr vorgesehene schnellverschlussartige Verbindung zwischen Aktorgehäuse 14 und Zwischenflansch 34.

Hierzu sind am Aktorgehäuse 14 zwei - in radialer Richtung r betrachtet - gegenüberliegend angeordnete erste Mitnahmeelement 42 angeordnet, während am Zwischenflansch 34 in axialer Richtung a fluchtend zu den ersten Mitnahmeelemente 42 angeordnete, zweite Mitnahmeelemente 44 vorgesehen sind. Wie Fig. 3a zu entnehmen ist, sind dabei die Mitnahmeelemente 42, 44 jeweils in Form von drehbar gelagerten Rollen ausgebildet, die mittels Wälzläger auf in radiale Richtung r ausgerichtete, am Aktorgehäuse 14 bzw. Zwischenflansch 34 angeordnete Stifte gelagert sind.

Die Führung der Mitnahmeelemente 42, 44 erfolgt über einen das Aktorgehäuse 14 und den Zwischenflansch 34 umfangsseitig umschließenden und in axialer Richtung a das Aktorgehäuse 14 und den Zwischenflansch 34 bereichsweise überlappenden Kulissenring 46, der an seiner inneren Umfangfläche eine entsprechende Nut 48, vgl. insbesondere Fig. 3b, aufweist, in der die ersten und zweiten Mitnahmeelemente 42, 44 zwangsgeführt sind.

Wie insbesondere aus Fig. 3b ersichtlich, ist die Nut 48 dabei derart ausgebildet, dass die in axialer Richtung a betrachtet obere Nutwand 48-1 eine bereichsweise rampenförmig nach unten, ein Maximum erreichend und anschließend wieder rampenförmig nach oben verlaufende Gestaltung aufweist, während die in axialer Richtung a betrachtet untere Nutwand 48-2 einen hierzu gegensinnigen, d.h. rampenförmig noch oben, ein Maximum erreichend und anschließend rampenförmig nach unten, Verlauf aufweist. Über einen lösbar mit dem Kulissenring 46 befestigbaren Hebel 50 ist eine vereinfachte Drehung des Kulissenrings 46 und damit eine Verklemmung des Randbereichs 16-1 der Membran 16 zwischen Ventilgehäuse 12 und Aktorgehäuse 14 ermöglicht.

Am Kulissenring 46 sind entsprechende Öffnungen bzw. Durchgänge 52 ausgebildet und derart angeordnet, dass die in axiale Richtung a fluchtend zueinander angeordnete ersten und zweiten Mitnahmeelemente 42, 44 jeweils hindurchpassen und somit nach Drehung des Kulissenrings 46 in eine entsprechende Entnahmeposition, also eine Position, in der die Öffnungen bzw. Durchgänge 52 fluchtend zu den jeweiligen ersten und zweiten Mitnahmeelementen 42, 44 angeordnet sind, das Aktorgehäuse 14 samt seinen Mitnahmeelementen 42 entnommen werden kann.

### Bezugszeichenliste

- 10: Membranvetil
- 12: Ventilgehäuse
- 12-1: Einlassöffnung
- 12-2: Auslassöffnung
- 14: Aktorgehäuse
- 16: Membran
- 16-1: Randbereich der Membran
- 18: Strömungskanal
- 20: Ventilsitz
- 22: Federträger
- 24: Federpaket
- 26: Druckkammer
- 28: Kolben
- 30: Antriebsstange
- 32: Ventilstange
- 34: Zwischenflansch
- 36: Schraubverbindung
- 38: Überwurfmutter
- 40: Hülse
- 42: erste Mitnehmerelemente
- 44: zweite Mitnehmerelemente
- 46: Kulissenring
- 48: Nut
- 48-1: obere Nutwand
- 48-2: untere Nutwand
- 50: Hebel
- 52: Öffnungen bzw. Durchgänge

- a: axiale Richtung
- r: radiale Richtung

## Patentansprüche

1. Membranventil (10), umfassend ein Ventilgehäuse (12) mit zumindest einem Strömungskanal (18) zur Fluiddurchströmung und einem Ventilsitz (20), ein mit dem Ventilgehäuse (12) verbundenes, einen Antrieb aufweisendes Aktorgehäuse (14), sowie eine das Ventil- und Aktorgehäuse (12, 14) fluiddicht trennende Membran (16), wobei die Membran (16) über ihren Randbereich (16-1) in axialer Richtung (a) betrachtet verklemmt und fluiddicht zwischen Ventil- und Aktorgehäuse (12, 14) gehalten ist, und die Membran (16) mit dem im Aktorgehäuse (14) angeordnetem Antrieb derart in Wirkverbindung steht, dass die Membran (16) zum Schließen des Strömungskanals (18) mit dem Ventilsitz (20) in Kontakt bringbar ist, wobei das Aktorgehäuse (14) über einen mit dem Ventilgehäuse (12) lösbar verbindbaren Zwischenflansch (34) mit dem Ventilgehäuse (12) verbunden ist, und wobei das Aktorgehäuse (14) mit dem Zwischenflansch (34) lösbar, auf den Randbereich (16-1) der Membran (16) eine Druckkraft ausübend, befestigbar ist, wobei das Aktorgehäuse (14) über Befestigungsmittel (38, 42, 44, 46) mit dem Zwischenflansch (34) verbindbar ist, wobei die Befestigungsmittel (38, 42, 44, 46) so ausgebildet sind, dass beim Verbinden das Aktorgehäuse (14) eine in axiale Richtung (a) gerichtete Relativbewegung in Bezug zum Zwischenflansch (34) ausführt, **dadurch gekennzeichnet, dass** die Befestigungsmittel in Form eines den Zwischenflansch (34) und das Aktorgehäuse (14) umfangsseitig umschließenden Kulissenringes (46) mit einer an seiner inneren Umfangfläche ausgebildeten Nut (48) sowie zwei am Aktorgehäuse (14) angeordnete, in der Nut (48) geführte erste Mitnahmeelemente (42) und zwei am Zwischenflansch (34) angeordnete, in der Nut (48) geführte zweite Mitnahmeelemente (44) ausgebildet sind, wobei in axialer Richtung (a) betrachtet die ersten und zweiten Mitnahmeelemente (42, 44) fluchtend zueinander angeordnet sind und die Nut (48) in axialer Richtung (a) betrachtet mit bereichsweise einen gegensinnig rampenförmigen Verlauf aufweisenden Nutwänden (48-1, 48-2) ausgebildet ist und dass der Kulissenring (46) in axiale Richtung (a) ausgerichtete Öffnungen (52) zur Nut (48) aufweist, wobei die Öffnungen (52) so dimensioniert und angeordnet sind, dass die in axiale Richtung (a) fluchtend zueinander angeordnete Mitnahmeelemente (42, 44) hindurchführbar sind.

2. Membranventil (10) nach einem Anspruch 1, **dadurch gekennzeichnet, dass** die am Aktorgehäuse (14) angeordneten ersten Mitnahmeelemente (42) und die am Zwischenflansch (34) angeordneten zweiten Mitnahmeelemente (44) jeweils radial gegenüberliegend angeordnet sind

3. Membranventil (10) nach Anspruch 1 oder 2, **dadurch gekennzeichnet, dass** die Mitnahmeelemente (42, 44) jeweils in Form einer - mittels eines Wälzlager auf einem in radiale Richtung (r) ausgerichteten Stift drehbar gelagerten - Rolle ausgebildet sind.

4. Membranventil (10) nach einem der Ansprüche 1 bis 3, **dadurch gekennzeichnet, dass** der Kulissenring (46) einen Antrieb (50) zum Aufbringen eines Drehmoments aufweist.

5. Membranventil (10) nach Anspruch 4, **dadurch gekennzeichnet, dass** der Antrieb in Form eines mit dem Kulissenring (46) verbundener Hebel (50) ausgebildet ist.

6. Membranventil (10) nach Anspruch 5, **dadurch gekennzeichnet, dass** der Hebel (50) lösbar mit dem Kulissenring (46) verbunden ist.

## Claims

1. Diaphragm valve (10) comprising a valve housing (12) with at least one flow path (18) for the flow of a fluid through it and a valve seat (20), an actuator housing (14) connected to the valve housing (12) and having a drive, as well as a diaphragm (16) separating the valve and the actuator housing (12, 14) in a fluid-tight manner, which diaphragm (16) is clamped along its edge area (16-1), as viewed in the axial direction (a), and held in a fluid-tight manner between the valve and actuator housings (12, 14), and which diaphragm (16) is operatively connected to the drive arranged in the actuator housing (14) in such a way that the diaphragm (16) can be brought into contact with the valve seat (20) in order to close the flow path (18), wherein the actuator housing (14) is connected to the valve housing (12) via an spacer flange (34) which can be detachably connected to the valve housing (12), and wherein the actuator housing (14) can be attached in a detachable manner by means of the spacer flange (34) and in such a manner that it exerts a compressive force on the edge area (16-1) of the diaphragm (16), which actuator housing (14) can be connected to the spacer flange (34) via fastening means (38, 42, 44, 46), which fastening means (38, 42, 44, 46) are designed in such a way that, during connection, the actuator housing (14) will perform a relative movement in the axial direction (a) with respect to the spacer flange (34), **characterized in that** the fastening means are in the form of a slotted ring (46) which surrounds the spacer flange (34) and the actuator housing (14) circumferentially and which has a groove (48) formed on its inner circumferential surface, as well as two first entrainment elements (42) arranged on the actuator housing (14) and guided in the groove (48), and two second entrainment elements (44) arranged on the spacer flange (34) and guided in the groove (48), which first and second entrainment elements (42, 44), as viewed in the axial direction (a), are aligned with one another, and which groove (48), as viewed in the axial direction (a), has groove walls (48-1, 48-2), some areas of which are ramp-shaped in opposite directions, and **in that** the slotted ring (46) has openings (52) aligned in the axial direction (a) to the groove (48), which openings (52) are dimensioned and arranged so as to allow the entrainment elements (42, 44), which are arranged in alignment with one another in the axial direction (a), to pass through them.

2. Diaphragm valve (10) according to claim 1, **characterized in that** the first entrainment elements (42) arranged on the actuator housing (14) and the second entrainment elements (44) arranged on the spacer flange (34) are each arranged radially opposite one another

3. Diaphragm valve (10) according to any one of claims 1 or 2, **characterized in that** the entrainment elements (42, 44) are each designed in the form of a roller that is rotatably mounted on a pin aligned in the radial direction (r) by means of a roller bearing.

4. Diaphragm valve (10) according to any one of claims 1 to 3, **characterized in that** the slotted ring (46) has a drive (50) for applying a torque.

5. Diaphragm valve (10) according to claim 4, **characterized in that** the drive is provided in the form of a lever (50) that is connected to the slotted ring (46).

6. Diaphragm valve (10) according to claim 5, **characterized in that** the lever (50) is detachably connected to the slotted ring (46).

## Revendications

1. Vanne à membrane (10), comprenant un boîtier de vanne (12) avec au moins un canal d'écoulement (18) destiné à être traversé par un fluide et un siège de vanne (20), un boîtier d'actionneur (14) relié au boîtier de vanne (12), présentant un entraînement, ainsi qu'une membrane (16) séparant de manière étanche au fluide le boîtier de vanne et d'actionneur (12, 14), dans laquelle la membrane (16) est maintenue sur sa zone de bord (16-1) vue dans la direction axiale (a) de manière bloquée et étanche au fluide entre le boîtier de vanne et d'actionneur (12, 14), et la membrane (16) est en liaison fonctionnelle avec l'entraînement disposé dans le boîtier d'actionneur (14), de telle sorte que la membrane (16) pour la fermeture du canal d'écoulement (18) peut être amenée en contact avec le siège de vanne (20), dans laquelle le boîtier d'actionneur (14) est relié au boîtier de vanne (12) par le biais d'une bride intermédiaire (34) pouvant être reliée de manière détachable au boîtier de vanne (12), et dans laquelle le boîtier d'actionneur (14) peut être fixé de manière détachable avec la bride intermédiaire (34), de manière à exercer une force de pression sur la zone de bord (16-1) de la membrane (16), dans laquelle le boîtier d'actionneur (14) peut être relié à la bride intermédiaire (34) par l'intermédiaire de moyens de fixation (38, 42, 44, 46), dans laquelle les moyens de fixation (38, 42, 44, 46) sont réalisés de sorte que lors de la liaison le boîtier d'actionneur (14) exécute un mouvement relatif dirigé dans la direction axiale (a) par rapport à la bride intermédiaire (34), **caractérisée en ce que** les moyens de fixation sont réalisés sous forme d'une bague à coulisse (46) entourant côté circonférence la bride intermédiaire (34) et le boîtier d'actionneur (14) avec une rainure (48) réalisée sur sa surface périphérique intérieure ainsi que deux premiers éléments d'entraînement (42) disposés sur le boîtier d'actionneur (14), guidés dans la rainure (48) et deux deuxièmes éléments d'entraînement (44) disposés sur la bride intermédiaire (34), guidés dans la rainure (48), dans laquelle vu dans la direction axiale (a) les premiers et deuxièmes éléments d'entraînement (42, 44) sont disposés en alignement les uns avec les autres et la rainure (48) vue dans la direction axiale (a) est réalisée avec des parois de rainure (48-1, 48-2) présentant par endroits un tracé formant des rampes en sens inverse et que la bague à coulisse (46) présente des ouvertures (52) orientées dans la direction axiale (a) par rapport à la rainure (48), dans laquelle les ouvertures (52) sont dimensionnées et disposées de telle sorte que les éléments d'entraînement (42, 44) disposés en alignement les uns avec les autres dans la direction axiale (a) peuvent être guidés à travers celles-ci.

2. Vanne à membrane (10) selon une revendication 1, **caractérisée en ce que** les premiers éléments d'entraînement (42) disposés sur le boîtier d'actionneur (14) et les deuxièmes éléments d'entraînement (44) disposés sur la bride intermédiaire (34) sont disposés respectivement de manière radialement opposée.

3. Vanne à membrane (10) selon la revendication 1 ou 2, **caractérisée en ce que** les éléments d'entraînement (42, 44) sont réalisés respectivement sous forme d'un galet - monté en rotation au moyen d'un palier à roulement sur une broche orientée dans la direction radiale (r) -.

4. Vanne à membrane (10) selon l'une quelconque des revendications 1 à 3, **caractérisée en ce que** la bague à coulisse (46) présente un entraînement (50) pour l'application d'un couple.

5. Vanne à membrane (10) selon la revendication 4, **caractérisée en ce que** l'entraînement est réalisé sous forme d'un levier (50) relié à la bague à coulisse (46).

6. Vanne à membrane (10) selon la revendication 5, **caractérisée en ce que** le levier (50) est relié à la bague à coulisse (46) de manière détachable.
